# EUROPEAN PATENT APPLICATION

(11) **EP 4 733 145 A1**
(43) Date of publication of application: **29.04.2026**
(21) Application number: 24209031.4
(22) Date of filing: 25.10.2024
(51) Int. Cl.: B60R 19/18

(54) **CRASH MANAGEMENT SYSTEM FOR A MOTOR VEHICLE**

(71) Applicant: Constellium Singen GmbH, 78224 Singen (DE)
(72) Inventor: GREILICH, Alexander, 78224 SINGEN (DE)
(74) Representative: Constellium - Propriété Industrielle

(57) **Abstract**

The invention relates to a crash management system (100) for a motor vehicle having a crossbeam (10) which extends substantially along a transverse direction (Y), wherein the crossbeam (10) has two crash boxes (24, 26) arranged at a distance from one another, wherein the crossbeam (10) can be fastened to a vehicle structure, and wherein the crossbeam (10) has a closed cross-section having a front belt (12), a rear belt (14) and two transverse walls (16, 18) connecting the front belt (12) with the rear belt (14).

## Description

### TECHNICAL FIELD OF THE INVENTION

The invention relates to a crash management system for a motor vehicle which, in connection with a so-called pole test, in which an obstacle (pole) having a round cross-section collides centrally with a crossbeam, is characterized by an especially advantageous deformation behavior of its crossbeam. In this regard, the danger of a structural failure at the rear side of its crossbeam facing away from the pole is particularly reduced.

### BACKGROUND

From DE 10 2019133507A1 is known a crash management system for a motor vehicle having the characteristics of the preamble of claim 1. The known crash management system is characterized by a stiffening element which is U-shaped or clamp-like in cross-section, which is arranged symmetrically to a longitudinal plane of the crossbeam on the side of the crossbeam which is at the rear viewed in direction of travel. The stiffening element is located on the rear belt of the crossbeam and encloses a section of the upper and lower transverse wall of the crossbeam in the direction of the front belt and is supposed to facilitate an advantageous crash behaviour in conjunction with the mentioned pole test.

### DISCLOSURE OF THE INVENTION

The crash management system according to the invention for a motor vehicle having the characteristics of claim 1 has the advantage that it prevents the rear belt on the crossbeam from tearing or failing, in particular in combination with the pole test.

The idea on which the invention is based involves generating, by means of zones of weakness introduced in a targeted manner in the region of the upper and/or lower transverse wall of the crossbeam on the side facing the front belt during the pole test, locally increased stresses in the region of the zones of weakness, which effect in the region of the zones of weakness a targeted deformation and thus energy absorption, such that in the region of the rear belt of the crossbeam facing away from the pole, smaller quantities of energy need to be absorbed, which results in lower material loads (stresses) and deformations of the crossbeam in the region of the rear belt and thus a lower danger of the crossbeam breaking in the region of the rear belt.

In addition, the proposed zones of weakness according to the invention can be used in a particularly simple manner on different profile cross-sections of cross members. In particular, the characteristics of the deformation behaviour of the cross member can be optimised for the respective application by scaling the zones of weakness. The proposed zones of weakness can also be used in addition to already present measures to specifically influence the strength properties of the crossbeam. Furthermore, the proposed zones of weakness can be realized on a crossbeam in an especially simple manner with relatively low costs, or indeed without additional costs, depending on how the zones of weakness are designed.

In the context of the above expositions, a crash management system according to the invention for a motor vehicle having the characteristics of claim 1 thus has a crossbeam which extends substantially along a transverse direction, wherein the crossbeam is connected with two crash boxes arranged at a distance to one another, and wherein the crossbeam can be fastened to a vehicle structure by means of the crash boxes. The crossbeam has a closed cross-section with a front belt, a rear belt and two transverse walls connecting the front belt with the rear belt. According to the invention, it is provided that at least one transverse wall on the side facing the front belt is formed at least one zone of weakness, wherein a first distance between the at least one zone of weakness and the front belt is smaller than a second distance between the at least one zone of weakness and the rear belt. In other words, the at least one zone of weakness is arranged on the side of the transverse wall or of the crossbeam facing the front belt.

Advantageous further developments of the crash management system according to the invention for a motor vehicle are listed in the sub-claims.

Regarding the arrangement of the at least one zone of weakness, it is preferably provided that in the case of one single zone of weakness the zone of weakness is aligned with a longitudinal plane of the crash management system, and that in the case of several zones of weakness, at least some of the zones of weakness are arranged symmetrically to the longitudinal plane. In the pole test, viewed in transverse direction of the crossbeam, this facilitates a stressing of the crossbeam which is symmetrical to the longitudinal plane.

In a particularly advantageous design of the at least one zone of weakness in terms of production, it is provided that the at least one zone of weakness is formed by a removal of material in the form of an opening or a milling at the at least one transverse wall. An opening is understood to mean in this regard in particular a hole or a through opening at the transverse wall, which can be created particularly easily by a drilling procedure, and a milling is understood to mean in this regard a recess in the form of a blind hole or similar cutout.

Alternatively to a removal of material in the region of the transverse wall, it can also be provided that the at least one zone of weakness is formed by a thermal treatment of the at least one transverse wall. In this regard, a local heating of the material of the transverse wall in the region of the zone of weakness which is to be formed, achieved by using a welding tool flame or similar, comes under consideration, which results for example in a reduced strength of the material of the transverse wall in the zone of weakness.

As a further alternative, it can be provided that the at least one zone of weakness is formed by a welding seam or by one or several welding points of the at least one transverse wall. A welding seam or welding points of this sort also have the effect of a local reduction in the strength properties of the transverse wall.

In addition, it is especially preferred that respectively at least one zone of weakness is formed at the two transverse walls, and that the zones of weakness are arranged at the transverse walls aligned to one another viewed in a vertical direction. A formation of this sort has the particular advantage that the zones of weakness, when they are formed as through openings, can be realized or produced in the crossbeam in a particularly simple manner, in that the zones of weakness are generated by one single drilling procedure.

For optimizing the deformation behavior of the crash management system, it can in addition be provided that respectively at least two zones of weakness are arranged on both sides of the longitudinal plane, and that the zones of weakness are formed at least partially differently with regard to shape and size. In other words, this means that depending on the distance of the zone of weakness from the longitudinal plane the differently formed zones of weakness facilitate locally different strength or deformation properties at the crossbeam.

It is additionally preferred in the case of respectively several zones of weakness on both sides of the longitudinal plane, that the distances between the zones of weakness viewed in transverse direction are at least partially of the same size. Alternatively, the distances can however also sometimes be at least partially of different size. The establishing of the distances between the individual zones of weakness on both sides of the longitudinal plane can be specified for example with numeric methods and depends inter alia on the respective load or application case and are also dependent on the shape and/or size of the zones of weakness.

A further constructive embodiment of the crash management system provides that between the two transverse walls all is arranged at least one intermediate wall which extends between the front belt and the rear belt. This at least one intermediate wall can extend parallel to the upper and lower transverse wall or non-parallel and/or curved. In the case that the intermediate wall extends in a non-parallel manner to the upper and lower transverse wall, or in the case of the intermediate wall extends in a curved manner, then in this area, in the case of the pole test, a reduced stiffening of the crossbeam on the part of the intermediate wall takes place. In particular, the arrangement of an intermediate wall of this sort makes it possible for this to be less stiff in the X direction, and thereby supports the effect of the zones of weakness and reduces the load on the rear belt.

Alternatively or additionally, it can be provided that between the two transverse walls is arranged an intermediate wall, which extends between the front belt and the rear belt, and that the intermediate wall has at least one zone of weakness, the geometry and/or arrangement of which is formed identically to the at least one zone of weakness. Thus the at least one zone of weakness can be generated together with the further zone of weakness by means of one single drilling procedure.

Further advantages, features and details of the invention result from the following description of preferred embodiments of the invention and on the basis of the drawings.

### BRIEF DESCRIPTION OF THE DRAWINGS

- Fig. 1: shows a crash management system for a motor vehicle in a top view,
- Fig. 2a and Fig 2b: shows a cut in the plane II-II of Fig. 1 in the region of the crossbeam with a curved or flat partition wall respectively.
- Fig. 3: shows a section of a transverse wall, in which a zone of weakness is generated by a thermal treatment and
- Fig. 4: shows a section of a transverse wall, in which a zone of weakness is generated by a welding seam or a welding point.

### DETAILED DESCRIPTION

Identical elements or elements with identical function are provided with identical reference signs in the figures.

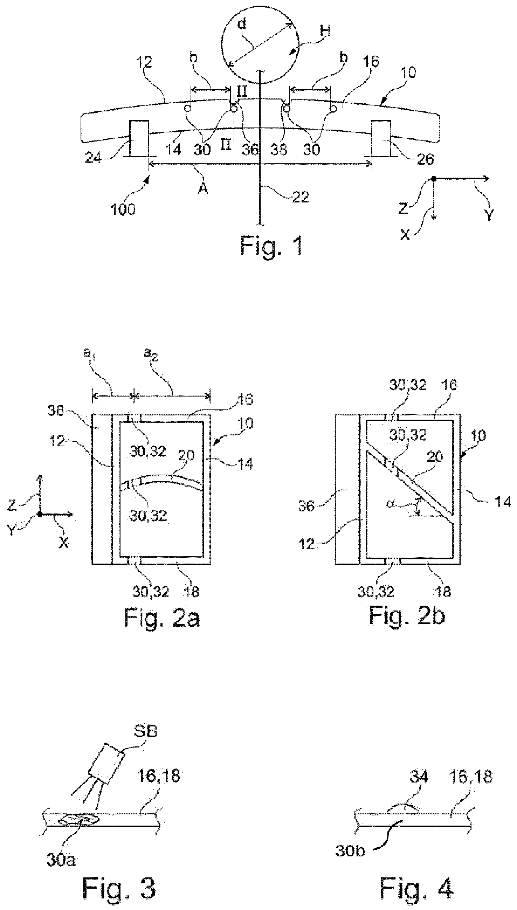

In Fig. 1 is shown a crash management system 100 for a motor vehicle which is not shown in detail. The crash management system 100 is used preferably, but not solely, at a vehicle front of the motor vehicle.

The crash management system 100 comprises a crossbeam 10, extending along a transverse direction Y, which, as shown, can in particular also be curved or bent in form. Preferably, the crossbeam 10 consists of aluminium and is designed as an extruded part. Fundamentally, however, the crossbeam 10 can also consist of steel or steel components, which are in particular connected to one another by welding seams.

The substantially rectangular-shaped, closed cross-section of the crossbeam 10 is formed by a front belt 12, a rear belt 14 and two transverse walls 16, 18 connecting the front belt 12 with the rear belt 14. With a view onto a vertical direction Z which is shown in Fig. 2, the transverse walls 16, 18 form an upper transverse wall 16 and a lower transverse wall 18.

Optionally, according to the representation in Fig. 2, it can be provided that between the upper transverse wall 16 and the lower transfers for 18 is arranged intermediate wall 20 which also connects the front belt 12 with the rear belt 14.

According to the representation in Fig. 1, the crash management system 100 or the crossbeam 10 has a longitudinal plane 22 which extends in alignment with the not-shown longitudinal axis of the motor vehicle in a longitudinal direction X and which corresponds to a plane of symmetry for the crash management system 100 or the crossbeam 10. Furthermore, two preferably identically formed crash boxes 24, 26 are provided at a distance A on the crossbeam 10, which crash boxes are connected to the crossbeam 10 in a manner which is known per se. By means of the crash boxes 24, 26, the crossbeam 10 is fastened to a not-shown vehicle structure (longitudinal beam) of the motor vehicle.

According to the invention, on at least one of the two transverse walls 16, 18, preferably at both transverse walls 16, 18, is formed respectively at least one zone of weakness 30.

The zones of weakness 30 can be formed for example in the form of openings 32, in particular through-holes, or, however, in the form of milled-out or recessed areas. As can be seen particularly with reference to Fig. 2, the zones of weakness 30 run on the side of the crossbeam 10 which faces the front belt 12. This implies that a first distance a₁ between the zone of weakness 30 and the front belt 12 is smaller than a second distance a₂ between the zone of weakness 30 and the rear belt 14.

When the intermediate wall 20 is present, it is in addition optionally provided that the intermediate wall 20 also has also at least one zone of weakness 30 wherein the zone of weakness 30 forms at the transverse walls 16, 18 and the intermediate wall 20, viewed in the vertical direction Z, are arranged aligned to one another and are preferably identical in form. Thus, the zones of weakness 30 can be generated by a common (single) drilling procedure. The intermediate wall 20 is in the form of a curved intermediate wall 20 in Fig. 2a. Alternatively, however, the intermediate wall can also be formed as a flat wall and runs at an angle α to the transverse walls 16, 18 (Fig. 2b).

Shown in Fig. 3 is the case that the zone of weakness 30a is formed on a transverse wall 16, 18 not by a removal of material or a milling, but by a thermal treatment of the transverse wall 16, 18. Here, the transverse wall 16, 18 is heated locally in the region of the zone of weakness 30a to be formed, for example by means of a welding tool SB. By means of the heat treatment, the strength properties of the transverse wall 16, 18 in the region of the zone of weakness 30a, are locally reduced.

Alternatively, to a heat treatment of the transverse wall 16, 18, according to Fig. 4 a can be provided that a zone of weakness 30 is generated by an addition of material in the form of a welding seam 34 or at least one welding point.

In the embodiment example shown in Fig. 1, the crossbeam 10 has respectively several zones of weakness 30 laterally from the longitudinal plane 22 or viewed in transverse direction Y. The distances b between the individual zones of weakness 30 can here either be of equal size or differently sized, depending on the application. In the same way, size and/or the shape of the zones of weakness 30, 30a, 30b can be different. The only essential factor is that the arrangement of the zones of weakness 30, 30a, 30b (even when one single zone of weakness 30 is present) is symmetrical to the longitudinal plane 22.

In addition, in Fig. 1 is shown an obstacle H in the form of a standardized pole, which is used for the purpose of standardized crash tests (pole test). Here, preferably, the distance between the two zones of weakness 30 arranged at both immediate sides of the longitudinal plane 22 is less than or equal to the diameter d of the obstacle H. Furthermore, it can be seen with reference to Fig. 1 that weakness areas 36, 38 can optionally be provided in the form of embossing in the region of the front belt 12. In the embodiment example, the weakness areas 36, 38 are oriented in alignment with the zones of weakness 30 viewed in transverse direction Y and extend along the entire height of the front belt 12.

The crash management system 100 or the crossbeam 10 described thus far can be adapted or modified in a variety of ways, without deviating from the inventive idea.

### List of reference

- 10: crossbeam
- 12: front belt
- 14: rear belt
- 16: transverse wall
- 18: transverse wall
- 20: intermediate wall
- 22: longitudinal plane
- 24: crash box
- 26: crash box
- 30,a,b: zone of weakness
- 32: opening
- 34: welding seam
- 36: weakness area
- 38: weakness area

- 100: crash management system

- a₁: first distance
- a₂: second distance
- b: distance
- d: diameter
- A: distance

- H: obstacle
- SB: welding tool
- Y: transverse direction
- X: longitudinal direction
- Z: vertical direction

## Claims

1. Crash management system (100) for a motor vehicle, having a crossbeam (10) which extends substantially along a transverse direction (Y), wherein the crossbeam (10) is connected to two crash boxes (24, 26) arranged at a distance to one another, wherein the crossbeam (10) can be fastened to a vehicle structure, and wherein the crossbeam (10) has a closed cross section having a front belt (12), a rear belt (14) and two transverse walls (16, 18) connecting the front belt (12) with the rear belt (14),
**characterized in**
**that** at least one transverse wall (16, 18) on the side facing the front belt (12) is formed at least one zone of weakness (30; 30a; 30b), wherein a first distance (a₁) between the at least one zone of weakness (30; 30a; 30b) and the front belt (12) is smaller than a second distance (a₂) between the at least one zone of weakness (30; 30a; 30b) and the rear belt (14).

2. Crash management system according to claim 1,
**characterized in**
**that** in the case of one single zone of weakness (30; 30a; 30b) the zone of weakness (30; 30a; 30b) is aligned with a longitudinal plane (22) of the crash management system (100) or that in the case of several zones of weakness (30; 30a; 30b) at least some of the zones of weakness (30; 30a; 30b) are arranged symmetrically to the longitudinal plane (22).

3. Crash management system according to claim 1 or 2,
**characterized in**
**that** the at least one zone of weakness (30) is formed by a removal of material in the form of an opening (32) or a milling at the at least one transverse wall (16, 18).

4. Crash management system according to claim 1 or 2,
**characterized in**
**that** the at least one zone of weakness (30a) by a thermal treatment of the at least one transverse wall (16, 18).

5. Crash management system according to claim 1 or 2,
**characterized in**
**that** the at least one zone of weakness (30b) is formed by a welding seam (34) or by one or several welding points at the at least one transverse wall (16, 18).

6. Crash management system according to any of claims 1 to 5,
**characterized in**
**that** at least one zone of weakness (30; 30a; 30b) is formed at the two transverse walls (16, 18) respectively, and that the zones of weakness (30; 30a; 30b) at the transverse walls (16, 18) are arranged aligned to one another viewed in a vertical direction (Z).

7. Crash management system according to any of claims 2 to 6,
**characterized in**
**that** on both sides of the longitudinal plane (22) are arranged respectively at least two zones of weakness (30; 30a; 30b), and that the zones of weakness (30; 30a; 30b) are formed at least partially differently with regard to their shape and size.

8. Crash management system according to claim 7,
**characterized in**
**that** distances (b) between the zones of weakness (30; 30a; 30b) viewed in transverse direction (Y) are at least partially of the same size.

9. Crash management system according to claim 7,
**characterized in**
**that** distances (b) between the zones of weakness (30; 30a; 30b) viewed in transverse direction are at least partially of different sizes.

10. Crash management system according to any of claims 1 to 9,
**characterized in**
**that** between the two transverse walls (16, 18) is arranged an intermediate wall (20) which extends between the front belt (12) and the rear belt (14), and the intermediate wall (20) does not extend parallel to the upper and lower transverse wall (16, 18) and/or is curved in shape.

11. Crash management system according to any of claims 1 to 9,
**characterized in**
**that** between the two transverse walls (16,18) is arranged an intermediate wall (20) extends between the front belt (12) and the rear belt (14), and that the intermediate wall (20) has at least one zone of weakness (30; 30a; 30b), the geometry and/or arrangement of which is identical in form to the at least one zone of weakness (30; 30a; 30b) in the transverse wall (16, 18).
